# EUROPÄISCHE PATENTSCHRIFT

(11) **EP 4 077 121 B1**
(45) Veröffentlichungstag und Bekanntmachung des Hinweises auf die Patenterteilung: **25.11.2026**
(21) Anmeldenummer: 20837958.6
(22) Anmeldetag: 16.12.2020
(51) Int. Cl.: B63B 49/00, B63H 25/06, G05D 1/00

(54) **STEUEREINRICHTUNG ZUR STEUERUNG EINES WASSERFAHRZEUGS, WASSERFAHRZEUG MIT EINER SOLCHEN STEUEREINRICHTUNG, UND VERFAHREN ZUM STEUERN EINES WASSERFAHRZEUGS**
CONTROL DEVICE FOR CONTROLLING A WATERCRAFT, WATERCRAFT HAVING SUCH A CONTROL DEVICE, AND METHOD FOR CONTROLLING A WATERCRAFT
DISPOSITIF DE COMMANDE POUR COMMANDER UN VÉHICULE NAUTIQUE, VÉHICULE NAUTIQUE ÉQUIPÉ D'UN TEL DISPOSITIF DE COMMANDE ET PROCÉDÉ DE COMMANDE D'UN VÉHICULE NAUTIQUE

(30) Priorität: 20.12.2019 DE 102019220494
(43) Veröffentlichungstag der Anmeldung: 26.10.2022
(73) Patentinhaber: Rolls-Royce Solutions GmbH, 88045 Friedrichshafen (DE)
(72) Erfinder: KOTTKE, Thomas, 71139 Ehningen (DE); HOFF, Rudolf, 88250 Weingarten (DE)
(74) Vertreter: Kordel, Mattias
(86) Internationale Anmeldenummer: PCT/EP2020/086552
(87) Internationale Veröffentlichungsnummer: WO 2021/122836

(56) Entgegenhaltungen:
- WO-A1-2019/231464
- KR-B1- 101 799 216
- US-B2- 8 825 266

## Beschreibung

Die Erfindung betrifft eine Steuereinrichtung zur Steuerung eines Wasserfahrzeugs, ein Wasserfahrzeug mit einer solchen Steuereinrichtung, und ein Verfahren zum Steuern eines Wasserfahrzeugs.

Im Zuge des immer mehr in den Blick rückenden Umweltschutzes werden vermehrt - insbesondere in Buchten - Zonen ausgewiesen, in denen Wasserfahrzeuge nicht mehr ankern dürfen, insbesondere um eine Beschädigung des Bodens oder Seegrunds zu vermeiden sowie aus Tier- und Pflanzenschutzgründen, insbesondere zum Schutz von Korallen. Teilweise sind ganze Buchten von solchen Ankerverboten betroffen. Um sich trotzdem in solchen Ankerverbotszonen aufhalten zu können, muss ein Wasserfahrzeug permanent durch seine Antriebsmittel an einer bestimmten Position gehalten werden. Dies erhöht den Energieverbrauch solcher Wasserfahrzeuge erheblich. Dies ist zum einen aus Kostengründen, zum anderen aber gerade wiederum aus Umweltschutzgründen - insbesondere mit Blick auf den Klimaschutz - nachteilig. Auch allgemein ist es erwünscht, ein Wasserfahrzeug insbesondere auch ohne Verankerung und zugleich kostengünstig und energieeffizient in seiner Bewegungsfreiheit einschränken, insbesondere positionieren zu können.

Der Erfindung liegt die Aufgabe zugrunde, eine Steuereinrichtung zur Steuerung eines Wasserfahrzeugs, ein Wasserfahrzeug mit einer solchen Steuereinrichtung, und ein Verfahren zum Steuern eines Wasserfahrzeugs zu schaffen, wobei die genannten Nachteile zumindest reduziert, vorzugsweise vermieden sind.

Die Aufgabe wird gelöst, indem die vorliegende technische Lehre bereitgestellt wird, insbesondere die Lehre der unabhängigen Ansprüche 1, 7 und 8 sowie der in den abhängigen Ansprüchen 2 bis 6 und 9 bis 11 und der Beschreibung offenbarten Ausführungsformen.

Die Aufgabe wird insbesondere gelöst, indem eine Steuereinrichtung geschaffen wird, die eingerichtet ist zur Steuerung eines Wasserfahrzeugs. Die Steuereinrichtung weist ein Positionserfassungsmodul auf, das eingerichtet ist, um eine momentane Position des Wasserfahrzeugs zu erfassen. Außerdem weist die Steuereinrichtung ein Positionierungsmodul auf, das eingerichtet ist, um dann, wenn sich das Wasserfahrzeug - insbesondere von einer ersten Position her kommend - einer Grenze eines begrenzten Bereichs bis auf einen vorbestimmten oder parametrierbaren Abstand annähert, eine neue, insbesondere zweite Position für das Wasserfahrzeug innerhalb des begrenzten Bereichs in Abhängigkeit von wenigstens einem Positionierungsparameter zu ermitteln. Dabei ist die zweite Position bevorzugt von der ersten Position verschieden. In vorteilhafter Weise ermöglicht die Steuereinrichtung bevorzugt eine - insbesondere antriebslose - Bewegung des Wasserfahrzeugs innerhalb des begrenzten Bereichs und sorgt zugleich dafür, dass das Wasserfahrzeug den begrenzten Bereich nicht verlässt, insbesondere indem die neue Position, insbesondere als zweite Position, für das Wasserfahrzeug ermittelt, vorzugsweise berechnet wird, wenn sich das Wasserfahrzeug einer Grenze des begrenzten Bereichs bis auf den vorbestimmten oder parametrierbaren Abstand annähert. Somit kann die Steuereinrichtung dafür sorgen, dass das Wasserfahrzeug effektiv innerhalb des begrenzten Bereichs gehalten wird. Dadurch, dass eine Verlagerungsbewegung des Wasserfahrzeugs zugelassen wird, muss ein Antrieb des Wasserfahrzeugs möglichst wenig angesteuert werden, um das Wasserfahrzeug in dem begrenzten Bereich zu halten.

Die Wahl der neuen Position des Wasserfahrzeugs innerhalb des begrenzten Bereichs erfolgt vorteilhaft so, dass es insbesondere keiner permanenten Ansteuerung oder Aktivierung des Antriebs bedarf, um das Wasserfahrzeug in dem begrenzten Bereich zu halten, sondern dass vielmehr - insbesondere bevorzugt in Abhängigkeit von wenigstens einem vorgegebenen Kriterium als dem wenigstens einen Positionierungsparameter, insbesondere Emissionsreduzierung, Lärmreduzierung, Kosteneffizienz oder Energieeffizienz - der Antrieb nur möglichst selten und/oder möglichst kurz angesteuert werden muss, wobei zugleich das Wasserfahrzeug den begrenzten Bereich nicht verlässt. Mithilfe der hier vorgeschlagenen Steuereinrichtung kann sich das Wasserfahrzeug insbesondere sicher auch in solchen Bereichen aufhalten, in denen es nicht vor Anker gehen darf, wobei insbesondere mit einem fix vorgegebenen Halten einer genau bestimmten Position verbundene hohe Kosten und hohe Emissionen vermieden werden.

Mithilfe der Steuereinrichtung ist es vorteilhaft auch möglich, das Wasserfahrzeug in einem Liegebereich als dem begrenzten Bereich zu halten, für den eine Ankerkette des Wasserfahrzeugs zu kurz ist.

Gemäß einer bevorzugten Ausgestaltung ist die Steuereinrichtung eine interne Steuereinrichtung, die insbesondere eingerichtet ist, um in einem Wasserfahrzeug zur Steuerung des Wasserfahrzeugs verwendet zu werden. Insbesondere ist die Steuereinrichtung bevorzugt eingerichtet, um Steuerbefehle auszugeben, aufgrund derer das Wasserfahrzeug gesteuert wird, wenn die Steuerbefehle in dem Wasserfahrzeug ausgeführt werden. Vorzugsweise weist die Steuereinrichtung eine hierzu eingerichtete Schnittstelle zur Verbindung mit dem Wasserfahrzeug auf.

Gemäß einer anderen Ausgestaltung ist die Steuereinrichtung als externe Steuereinrichtung ausgebildet, wobei eine solche externe Steuereinrichtung insbesondere als zentraler Dienstgeber, insbesondere Server, oder als dezentrale Recheneinrichtung, insbesondere als Cloud, ausgebildet sein kann. Die als externe Steuereinrichtung ausgebildete Steuereinrichtung ist vorzugsweise mit einer internen Steuereinrichtung eines Wasserfahrzeugs wirkverbunden, insbesondere derart, dass Daten von der externen Steuereinrichtung an die interne Steuereinrichtung übertragbar sind. Insbesondere ist die durch die externe Steuereinrichtung ermittelte neue Position an die interne Steuereinrichtung übertragbar. Vorzugsweise ist die externe Steuereinrichtung eingerichtet, um für einen bidirektionalen Datenaustausch mit der internen Steuereinrichtung wirkverbunden zu sein, sodass auch Daten von der internen Steuereinrichtung des Wasserfahrzeugs zu der externen Steuereinrichtung übermittelt werden können, beispielsweise die momentane Position des Wasserfahrzeugs.

Das Positionserfassungsmodul ist bevorzugt eingerichtet zur satellitengesteuerten Positionserfassung, besonders bevorzugt zur satellitengesteuerten Navigation.

Der Abstand, bis auf den sich das Wasserfahrzeug der Grenze des begrenzten Bereichs annähern kann, bis die neue Position ermittelt wird, ist gemäß einer Ausgestaltung vorbestimmt. Dabei kann der Abstand intern in der Steuereinrichtung oder von außen, beispielsweise durch einen Nutzer oder durch eine externe Steuereinrichtung, vorgegeben sein.

Gemäß einer anderen bevorzugten Ausgestaltung ist der Abstand parametrierbar. Es ist dann vorteilhaft möglich, den Abstand bedarfsgerecht zu verändern, insbesondere einzustellen.

Insbesondere kann der Abstand auch null sein oder zu null gewählt werden. In diesem Fall bedeutet ein Annähern an die Grenze des begrenzten Bereichs bis auf den zu null definierten Abstand, dass das Wasserfahrzeug die Grenze des begrenzten Bereichs erreicht.

Der begrenzte Bereich ist insbesondere ein Bereich, der kleiner ist als eine durch das Wasserfahrzeug befahrbare Wasserfläche, aber größer als das Wasserfahrzeug selbst. Insbesondere kann der begrenzte Bereich eine flächenmäßige Ausdehnung aufweisen, die mindestens zweimal, vorzugsweise höchstens fünfzigmal, vorzugsweise höchstens vierzigmal, vorzugsweise höchstens dreißigmal, vorzugsweise höchstens zwanzigmal, vorzugsweise höchstens zehnmal, vorzugsweise höchstens fünfmal, der effektiven, auf eine Gewässeroberfläche projizierten Fläche des Wasserfahrzeugs entspricht. Der begrenzte Bereich kann aber auch größer sein. Insbesondere ist der begrenzte Bereich durch wenigstens eine Grenze oder eine Mehrzahl von Grenzen von wenigstens einem Ausschlussbereich getrennt, in den das Wasserfahrzeug nicht einfahren darf oder in dem sich das Wasserfahrzeug nicht aufhalten darf. Das Wasserfahrzeug darf sich dabei innerhalb der Grenze oder Grenzen des begrenzten Bereichs aufhalten, diese aber nicht in den wenigstens einen Ausschlussbereich hinein überschreiten.

Der begrenzte Bereich ist insbesondere zusammenhängend ausgebildet, derart, dass das Wasserfahrzeug alle Gebiete innerhalb des begrenzten Bereichs erreichen kann, ohne einen Ausschlussbereich passieren zu müssen. Es ist möglich, dass der begrenzte Bereich lückenlos ausgebildet ist, es ist aber auch möglich, dass innerhalb des begrenzten Bereichs Verbotsbereiche existieren, wobei ein solcher Verbotsbereich insbesondere ein Ausschlussbereich ist, der von dem begrenzten Bereich umschlossen ist, quasi nach Art einer Enklave.

Ein solcher Ausschlussbereich kann insbesondere auch durch eine Wassertiefe definiert sein, die ein vorgegebenes Minimum unterschreitet. Insbesondere wird bevorzugt eine Mindest-Wassertiefe, das heißt ein Mindestabstand zwischen einem Kiel des Wasserfahrzeugs und einem Grund des Gewässers definiert, die eingehalten werden muss. Der begrenzte Bereich endet dann dort, wo die Wassertiefe diesen vordefinierten Mindestabstand oder die Mindest-Wassertiefe unterschreitet. Ein derartiger Ausschlussbereich, der auch als Untiefe bezeichnet wird, kann vorgegeben sein, er kann aber auch dynamisch, insbesondere in Echtzeit, ermittelt werden, insbesondere mithilfe einer Tiefenmesseinrichtung, insbesondere eines Echolots.

Unter einem Ausschlussbereich wird also insbesondere ein Bereich verstanden, in dem das Wasserfahrzeug sich nicht aufhalten darf oder in den es ausgehend von dem begrenzten Bereich nicht einfahren darf. Das Wasserfahrzeug darf also insbesondere eine Grenze des begrenzten Bereichs zu dem Ausschlussbereich nicht überschreiten, was im Folgenden auch als Grenzverletzung bezeichnet wird. Ein solcher Ausschlussbereich kann außerhalb des begrenzten Bereichs angeordnet sein, aber auch als Verbotsbereich innerhalb des begrenzten Bereichs, insbesondere von dem begrenzten Bereich umschlossen sein. Ein solcher Verbotsbereich kann beispielsweise wenigstens eine Untiefe, eine Korallenansiedlung, oder eine andere Gegebenheit aufweisen, die entweder für das Wasserfahrzeug Gefahr bedeutet, oder für die umgekehrt das Wasserfahrzeug gefährlich ist. Ein solcher Ausschlussbereich kann aber auch durch die Position eines anderen Wasserfahrzeugs definiert sein, wobei eine Kollision mit dem anderen Wasserfahrzeug vermieden werden muss.

Wie bereits ausgeführt, bedeutet die Formulierung, dass sich das Wasserfahrzeug in dem begrenzten Bereich aufhalten darf, insbesondere, dass das Wasserfahrzeug den begrenzten Bereich nicht verlassen darf, wobei insbesondere Grenzen des begrenzten Bereichs durch das Wasserfahrzeug nicht überfahren werden dürfen.

Die Steuereinrichtung ist insbesondere eingerichtet, um den begrenzten Bereich virtuell vorzugeben, oder zu empfangen, oder vorgegeben zu erhalten. Entsprechend sind auch die Grenzen des begrenzten Bereichs virtuelle Grenzen. Insbesondere wird der begrenzte Bereich in einem Steuerprogramm, insbesondere einem computerimplementierten Steuerprogramm oder einer Steuersoftware für die Steuerung des Wasserfahrzeugs definiert.

Dass die neue Position ermittelt wird, bedeutet bevorzugt, dass die neue Position berechnet wird.

Die neue, zweite Position wird bevorzugt nicht gezielt von der ersten Position verschieden ermittelt oder berechnet, insbesondere wird die erste Position bevorzugt bei der Ermittlung der zweiten Position nicht berücksichtigt. Vielmehr könnte gemäß der hier vorgeschlagenen Vorgehensweise die zweite Position höchstens rein zufällig mit der ersten Position identisch sein, was eine so geringe Wahrscheinlichkeit hat, dass im Ergebnis die zweite Position stets von der ersten Position verschieden sein wird.

Dass das Wasserfahrzeug von einer ersten Position her kommt, bedeutet, dass das Wasserfahrzeug zunächst an der ersten Position angeordnet ist und sich dann von dieser ersten Position wegbewegt, insbesondere entfernt, und sich dabei der Grenze des begrenzten Bereichs nähert.

Die erste Position kann dabei insbesondere eine zuvor ermittelte neue oder zweite Position sein, die zuvor für das Wasserfahrzeug durch das Positionierungsmodul ermittelt wurde. Entsprechend kann die dann ermittelte neue Position eine dritte Position für das Wasserfahrzeug sein, und so weiter. Die hier beschriebene Vorgehensweise kann also durch die Steuereinrichtung mehrfach wiederholt, insbesondere fortlaufend iteriert werden, wobei stets ab der zweiten Durchführung dieser Schritte die erste Position eine zuvor ermittelte zweite Position ist, und wobei die zweite Position eine ermittelte neue, beispielsweise dritte Position, ist.

Gemäß einer Weiterbildung der Erfindung ist vorgesehen, dass das Positionserfassungsmodul eingerichtet ist, um die momentane Position des Wasserfahrzeugs wiederholend zu erfassen. Vorteilhaft kann auf diese Weise insbesondere permanent die momentane Position des Wasserfahrzeugs ermittelt und so festgestellt werden, ob das Wasserfahrzeug sich einer Grenze des begrenzten Bereichs annähert.

Insbesondere ist die Steuereinrichtung bevorzugt eingerichtet, um mithilfe des Positionserfassungsmoduls die momentane Position des Wasserfahrzeugs wiederholend zu erfassen, und mithilfe des Positionierungsmoduls wiederholend, insbesondere permanent zu prüfen, ob sich das Wasserfahrzeug einer Grenze des begrenzten Bereichs bis auf den vorbestimmten oder parametrierbaren Abstand annähert, und in diesem Fall stets die neue Position für das Wasserfahrzeug insbesondere als zweite Position zu ermitteln. Das Wasserfahrzeug wird so mithilfe der Steuereinrichtung dauerhaft innerhalb des begrenzten Bereichs gehalten, das heißt seine Bewegungsfreiheit wird effektiv auf den begrenzten Bereich eingeschränkt, da stets dann eine neue Position für das Wasserfahrzeug ermittelt wird, wenn dieses sich einer Grenze des begrenzten Bereichs bis auf den vorbestimmten oder parametrierbaren Abstand annähert.

Gemäß einer Weiterbildung der Erfindung ist bevorzugt vorgesehen, dass das Positionierungsmodul eingerichtet ist, um Steuerungsbefehle zu generieren, aufgrund derer das Wasserfahrzeug an die neue Position verlagert wird, wenn die Steuerungsbefehle in dem Wasserfahrzeug ausgeführt werden. Auf diese Weise ist die Steuereinrichtung im Zusammenwirken mit dem Wasserfahrzeug, insbesondere im Zusammenwirken mit einem Antrieb des Wasserfahrzeugs, in der Lage, das Wasserfahrzeug an der neuen Position neu zu positionieren und damit letztlich effektiv innerhalb des begrenzten Bereichs zu halten.

Gemäß einer Weiterbildung der Erfindung ist vorgesehen, dass der wenigstens eine Positionierungsparameter ausgewählt ist aus einer Gruppe, bestehend aus einem Verlagerungsparameter, einer Größe des Wasserfahrzeugs, einer flächenmäßigen Ausdehnung des begrenzten Bereichs, einem Zeitpunkt, zu dem das Wasserfahrzeug den begrenzten Bereich bestimmungsgemäß verlassen wird, einer Fremdposition von wenigstens einem Fremdwasserfahrzeug in dem begrenzten Bereich, und einer Bewegung, insbesondere einem Fremd-Verlagerungsparameter, des wenigstens einen Fremdwasserfahrzeugs. Jeder dieser Parameter kann relevant sein für die Ermittlung der neuen Position, insbesondere derart, dass das Wasserfahrzeug mit möglichst geringem Eingriff in den Antrieb und somit insbesondere energie- und kosteneffizient, mit geringen Lärmemissionen und geringen Schadstoffemissionen, in dem begrenzten Bereich gehalten werden kann.

Unter einem Verlagerungsparameter wird insbesondere ein Parameter verstanden, der mit einer insbesondere antriebslosen Verlagerung des Wasserfahrzeugs innerhalb des begrenzten Bereichs verknüpft ist, wobei er insbesondere geeignet ist, die Verlagerung des Wasserfahrzeugs innerhalb des begrenzten Bereichs zu beschreiben.

Die Berücksichtigung eines Verlagerungsparameters ermöglicht insbesondere eine Abstimmung der neuen Position auf die tatsächliche Verlagerung des Wasserfahrzeugs innerhalb des begrenzten Bereichs, sodass insbesondere eine Zeit, die bis zu einer nächsten Annäherung an einen Ausschlussbereich vergeht, möglichst groß gemacht, insbesondere maximiert werden kann.

Die Bewegung des Wasserfahrzeugs in dem begrenzten Bereich und insbesondere die Annäherung an einen Ausschlussbereich erfolgt typischerweise durch an dem Wasserfahrzeug angreifende, äußere Kräfte, insbesondere aufgrund von Wind und/oder Strömungen im Gewässer. Die Berücksichtigung des wenigstens einen Verlagerungsparameters erlaubt es, solche Einflüsse in die Betrachtung mit einzubeziehen und somit eine besonders günstige neue Position für das Wasserfahrzeug aufzufinden. Insbesondere wird wenigstens ein Verlagerungsparameter des antriebslosen Wasserfahrzeugs in dem begrenzten Bereich berücksichtigt.

Bevorzugt ist der Verlagerungsparameter ausgewählt aus einer Gruppe, bestehend aus einer Driftgeschwindigkeit des Wasserfahrzeugs, einer Winkelgeschwindigkeit des Wasserfahrzeugs, einer Driftbeschleunigung des Wasserfahrzeugs, und einer Winkelbeschleunigung des Wasserfahrzeugs.

Insbesondere über einen der Parameter Driftgeschwindigkeit, Winkelgeschwindigkeit, Driftbeschleunigung und Winkelbeschleunigung können Strömungsverhältnisse und/oder Windverhältnisse in dem begrenzten Bereich sehr genau erfasst und berücksichtigt werden.

Als Driftgeschwindigkeit des Wasserfahrzeugs wird bevorzugt eine vektorielle Driftgeschwindigkeit erfasst, das heißt eine Größe, die sich zusammensetzt aus einem Betrag und einer Richtung. Die Driftbeschleunigung ist bevorzugt eine zeitliche Ableitung der Driftgeschwindigkeit.

Unter einer Winkelgeschwindigkeit des Wasserfahrzeugs wird insbesondere eine Geschwindigkeit verstanden, mit welcher das Wasserfahrzeug um eine durch seinen Schwerpunkt verlaufende vertikale Achse dreht. Bewegt sich das Wasserfahrzeug antriebslos in dem begrenzten Bereich, ist einer Driftbewegung typischerweise eine Drehbewegung oder Rotationsbewegung überlagert, insbesondere da Wind und/oder Strömungen asymmetrisch an dem Wasserfahrzeug angreifen. Die Winkelbeschleunigung ist bevorzugt eine zeitliche Ableitung der Winkelgeschwindigkeit.

Insbesondere erfolgt bei der Ermittlung der neuen Position bevorzugt eine Gewichtung verschiedener Verlagerungswege für das Wasserfahrzeug mit Werten für den wenigstens einen Verlagerungsparameter entlang dieser Verlagerungswege. Auf diese Weise kann die neue Position optimal bestimmt werden.

Unter der Größe des Wasserfahrzeugs wird insbesondere dessen effektive, auf die Gewässeroberfläche projizierte Fläche verstanden. Diese kann insbesondere relevant sein für die Ermittlung der neuen Position innerhalb des begrenzten Bereichs und/oder für die Beurteilung der Bewegungsfreiheit des Wasserfahrzeugs in dem begrenzten Bereich.

Die flächenmäßige Ausdehnung des begrenzten Bereichs ist insbesondere die Fläche oder der Flächeninhalt, über den sich der begrenzte Bereich erstreckt beziehungsweise den der begrenzte Bereich aufweist. Auch dieses Maß ist - gegebenenfalls insbesondere im Verhältnis zu der Größe des Wasserfahrzeugs - relevant für die Frage der Bewegungsfreiheit des Wasserfahrzeugs innerhalb des begrenzten Bereichs.

Der Zeitpunkt, zu dem das Wasserfahrzeug den begrenzten Bereich bestimmungsgemäß verlassen wird, ist vorteilhaft insoweit relevant, als die neue Position gegebenenfalls vorteilhaft weniger weit entfernt von der momentanen Position des Wasserfahrzeugs ermittelt werden kann, wenn bekannt ist, dass das Wasserfahrzeug den begrenzten Bereich bestimmungsgemäß zu einer bestimmten Zeit in der Zukunft verlässt, wobei dann die neue Position vorteilhaft gerade so ermittelt wird, dass das Wasserfahrzeug - insbesondere bei antriebsloser Verlagerung - den begrenzten Bereich bis zu diesem zukünftigen Zeitpunkt nicht mehr verlässt. Einer weitergehenden Verlagerung, insbesondere mit größerem Abstand zu einer Grenze des begrenzten Bereichs, bedarf es dann nicht, was vorteilhaft Energie und Kosten spart, sowie Lärm- und Schadstoffemissionen verringert. Das Wasserfahrzeug kann den begrenzten Bereich beispielsweise bestimmungsgemäß verlassen, weil es eine vorgesehene Reiseroute beginnt oder fortsetzt, beispielsweise planmäßig aus einer Ankerverbotszone, insbesondere einer Bucht, oder dergleichen ausfährt.

Die Fremdposition und/oder Bewegung von wenigstens einem Fremdwasserfahrzeug in dem begrenzten Bereich bei der Ermittlung der neuen Position zu berücksichtigen kann insbesondere vorteilhaft eine Kollision mit dem Fremdwasserfahrzeug vermeiden helfen.

Ein Fremdwasserfahrzeug ist insbesondere ein Wasserfahrzeug, welches mit dem im Rahmen der vorliegenden Lehre betrachteten, insbesondere gesteuerten oder positionierten Wasserfahrzeug nicht identisch ist. Werden die Fremdposition und/oder die Bewegung des wenigstens einen Fremdwasserfahrzeugs bereits bei der Ermittlung der neuen Position berücksichtigt, hat dies darüber hinaus den Vorteil, dass Ausweichbewegungen zur Vermeidung einer Kollision mit dem Fremdwasserfahrzeug, für die der Antrieb des Wasserfahrzeugs angesteuert werden müsste, möglichst vermieden werden können, oder deren Zahl zumindest verringert werden kann. Dies führt wiederum zu einer Reduzierung des Energieverbrauchs, der Emissionen und des Lärms, der von dem Wasserfahrzeug ausgeht.

Die Fremdposition und/oder die Bewegung des wenigstens einen Fremdwasserfahrzeugs wird bevorzugt durch Abstandsmessung ermittelt, insbesondere mittels eines Radarsystems, eines Lidarsystems, und/oder eines anderen geeigneten Systems zur Abstandsmessung. Alternativ oder zusätzlich ist es möglich, dass die Fremdposition und/oder die Bewegung des wenigstens einen Fremdwasserfahrzeugs als Information von dem Fremdwasserfahrzeug erhalten wird, insbesondere über Schiffspositionierungssysteme des Wasserfahrzeugs einerseits und des Fremdwasserfahrzeugs andererseits, die vorzugsweise untereinander Daten austauschen.

Liegt das Fremdwasserfahrzeug vor Anker, kann dessen Position als Kreis um den Ankerpunkt angenommen werden. Es kann insbesondere dann in besonders einfacher Weise eine Kollision mit dem Fremdwasserfahrzeug vermieden werden, in dem dieser Kreis - einschließlich seines Flächeninhalts - als neuer Ausschlussbereich innerhalb des begrenzten Bereichs für das Wasserfahrzeug definiert wird.

Eine besonders einfache Weise, die Fremdposition und/oder Bewegung des wenigstens einen Fremdwasserfahrzeugs zu berücksichtigen, besteht auch darin, dass der begrenzte Bereich für das Wasserfahrzeug verkleinert wird, wobei insbesondere ein Aufenthaltsbereich des Fremdwasserfahrzeugs aus dem begrenzten Bereich als Ausschlussbereich ausgenommen wird.

Gemäß einer Weiterbildung der Erfindung ist vorgesehen, dass die Steuereinrichtung eingerichtet ist, um den wenigstens einen Verlagerungsparameter wiederholend ortsabhängig zu erfassen. Dies ermöglicht insbesondere vorteilhaft eine Kenntnis und auch Berücksichtigung der ortsabhängigen Verlagerungsbedingungen für das Wasserfahrzeug innerhalb des begrenzten Bereichs.

Gemäß einer Weiterbildung der Erfindung ist vorgesehen, dass die Steuereinrichtung ein Kartierungsmodul aufweist, das eingerichtet ist, um den wenigstens einen Verlagerungsparameter einem Ort innerhalb des begrenzten Bereichs zuzuordnen, an dem der wenigstens eine Verlagerungsparameter durch die Steuereinrichtung erfasst ist. Auf diese Weise kann vorteilhaft eine Kartierung des wenigstens einen Verlagerungsparameters und damit der Verlagerungsbedingungen auf dem begrenzten Bereich erfolgen, was wiederum insbesondere zu einer möglichst geeigneten Ermittlung der neuen Position genutzt werden kann.

Gemäß einer Weiterbildung der Erfindung ist vorgesehen, dass die Steuereinrichtung ein Kommunikationsmodul aufweist, das eingerichtet ist, um wenigstens eine Information von dem Fremdwasserfahrzeug zu empfangen. Die Steuereinrichtung kann somit von dem Fremdwasserfahrzeug lernen und insbesondere Daten nutzen, die nicht durch die Steuereinrichtung selbst erhoben wurden. Somit wird die Datenbasis für die Steuereinrichtung vorteilhaft erweitert. Die wenigstens eine Information ist bevorzugt ausgewählt aus einer Gruppe, bestehend aus einer Fremdposition des Fremdwasserfahrzeugs und einem Fremd-Verlagerungsparameter des Fremdwasserfahrzeugs. Insbesondere diese Informationen ermöglichen nicht nur die Berücksichtigung des Fremdwasserfahrzeugs selbst bei der Bestimmung der neuen Position, sondern zugleich auch die Erfassung von Verlagerungsbedingungen auf dem begrenzten Bereich an Orten, an denen das Wasserfahrzeug selbst nicht angeordnet ist, sondern wo sich das Fremdwasserfahrzeug aufhält. Die Verlagerungsbedingungen innerhalb des begrenzten Bereichs können so vorteilhaft auch an Orten entfernt von dem Wasserfahrzeug erfasst und berücksichtigt werden.

Der Fremd-Verlagerungsparameter ist dabei bevorzugt ausgewählt aus einer Gruppe, bestehend aus einer Driftgeschwindigkeit des Fremdwasserfahrzeugs, einer Winkelgeschwindigkeit des Fremdwasserfahrzeugs, einer Driftbeschleunigung des Fremdwasserfahrzeugs, und einer Winkelbeschleunigung des Fremdwasserfahrzeugs.

Bevorzugt ist das Kommunikationsmodul eingerichtet, um bidirektional mit dem Fremdwasserfahrzeug zu kommunizieren, demnach insbesondere auch wenigstens eine Information an das Fremdwasserfahrzeug zu übermitteln.

Insbesondere ist bevorzugt vorgesehen, dass die Steuereinrichtung und das wenigstens eine Fremdwasserfahrzeug wenigstens eine Information austauschen.

Der Fremd-Verlagerungsparameter und/oder die Fremdposition können im Rahmen einer Sensordatenfusion insbesondere mit Ergebnissen einer Abstandsmessung verknüpft werden und so die Genauigkeit der Positionsbestimmung für das Fremdwasserfahrzeug in der Steuereinrichtung erhöhen.

Als Fremd-Verlagerungsparameter des Fremdwasserfahrzeugs werden bevorzugt an verschiedenen Orten des begrenzten Bereichs erfasste Driftgeschwindigkeiten, insbesondere einschließlich der Driftrichtungen, das heißt als vektorielle Größen, Driftbeschleunigungen, Winkelgeschwindigkeiten und/oder Winkelbeschleunigungen übermittelt. Somit können die Bedingungen in verschiedenen Gebieten des begrenzten Bereichs rascher erfasst werden, als wenn alleine die von dem Wasserfahrzeug selbst erfassten Daten herangezogen werden.

Insgesamt werden also die von dem Fremdwasserfahrzeug erhaltenen Daten genutzt, um zu lernen, wie sich das Fremdwasserfahrzeug in dem begrenzten Bereich verhält. Dies kann dann bei der Ermittlung der neuen Position berücksichtigt werden, wobei insbesondere einfließt, wo sich die Wasserfahrzeuge voraussichtlich treffen.

Gemäß einer Weiterbildung der Erfindung ist vorgesehen, dass das Kartierungsmodul eingerichtet ist, um von dem wenigstens einen Fremdwasserfahrzeug erhaltene Fremd-Verlagerungsparameter in die Kartierung des wenigstens einen Verlagerungsparameters aufzunehmen. Somit kann die Kartierung schneller voranschreiten, als dies ausschließlich mit Daten des Wasserfahrzeugs selbst möglich wäre, sodass rascher vollständige Informationen über die Verhältnisse in dem begrenzten Bereich zur Verfügung stehen, insbesondere über Strömungs- und Windverhältnisse.

Die Steuereinrichtung ist bevorzugt insbesondere eingerichtet, um ein erfindungsgemäßes Verfahren oder ein Verfahren nach einer der im Folgenden noch beschriebenen Ausführungsformen durchzuführen.

Die Aufgabe wird auch gelöst, indem ein Wasserfahrzeug geschaffen wird, welches eine erfindungsgemäße Steuereinrichtung oder eine Steuereinrichtung nach einem der zuvor beschriebenen Ausführungsbeispiele aufweist. In Zusammenhang mit dem Wasserfahrzeug ergeben sich insbesondere die Vorteile, die bereits in Zusammenhang mit der Steuereinrichtung erläutert wurden.

Unter einem Wasserfahrzeug wird insbesondere ein Fahrzeug verstanden, welches zur Fortbewegung auf dem Wasser oder im Wasser bestimmt ist. Insbesondere wird unter einem Wasserfahrzeug ein Fahrzeug verstanden, welches einen eigenen Antrieb aufweist, also selbstfahrend ausgebildet ist. Insbesondere wird unter einem Wasserfahrzeug ein Schiff, Boot oder Floß verstanden.

Die Aufgabe wird auch gelöst, indem ein Verfahren zum Steuern eines Wasserfahrzeugs geschaffen wird, wobei ein begrenzter Bereich vorgegeben ist oder vorgegeben wird, in dem sich das Wasserfahrzeug aufhalten darf, wobei eine momentane Position des Wasserfahrzeugs - vorzugsweise wiederholend - erfasst wird, wobei dann, wenn sich das Wasserfahrzeug - insbesondere von einer ersten Position her kommend - einer Grenze des begrenzten Bereichs bis auf einen vorbestimmten oder parametrierbaren Abstand annähert, eine neue, insbesondere zweite Position für das Wasserfahrzeug innerhalb des begrenzten Bereichs in Abhängigkeit von wenigstens einem Positionierungsparameter ermittelt wird, wobei die zweite Position vorzugsweise von der ersten Position verschieden ist oder verschieden gewählt wird. In Zusammenhang mit dem Verfahren ergeben sich insbesondere die Vorteile, die bereits in Zusammenhang mit der Steuereinrichtung erläutert wurden.

Insbesondere ist das Verfahren bevorzugt gekennzeichnet durch wenigstens einen Verfahrensschritt, der explizit oder implizit in Zusammenhang mit der Steuereinrichtung und deren Funktion erläutert wurde.

Das Verfahren ist insbesondere ein Verfahren zum Halten des Wasserfahrzeugs in dem begrenzten Bereich.

Bevorzugt wird das Wasserfahrzeug an der neuen Position derart innerhalb des begrenzten Bereichs positioniert, dass ein Antrieb des Wasserfahrzeugs möglichst wenig angesteuert werden muss, um das Wasserfahrzeug in dem begrenzten Bereich zu halten.

Dass der Antrieb möglichst wenig angesteuert werden muss, bedeutet insbesondere, dass der Antrieb möglichst selten und/oder möglichst kurz angesteuert werden muss. Eine möglichst kurze Ansteuerung bedeutet dabei insbesondere eine zeitlich möglichst wenig ausgedehnte, also zeitlich kurze, Aktivierung des Antriebs. Eine möglichst seltene Ansteuerung bedeutet insbesondere, dass eine Anzahl und/oder eine Häufigkeit der Ansteuerungen des Antriebs möglichst gering gehalten, insbesondere minimiert ist. Die Anzahl ist dabei insbesondere eine absolute Anzahl der Ansteuerungen des Antriebs in dem begrenzten Bereich. Die Häufigkeit ist insbesondere eine zeitliche Dichte, das heißt Anzahldichte, der Ansteuerungen des Antriebs.

Zur Durchführung des Verfahrens werden bevorzugt folgende Schritte durchgeführt:
Die momentane Position des Wasserfahrzeugs wird a) wiederholend erfasst, wobei b) die neue Position für das Wasserfahrzeug ermittelt wird, wenn sich das Wasserfahrzeug dem Ausschlussbereich bis auf den vorbestimmten oder parametrierbaren Abstand nähert, und wobei c) das Wasserfahrzeug an die neue Position verlagert wird. Dabei ist gemäß Schritt b) vorgesehen, dass die neue Position derart ermittelt wird, dass eine Anzahl notwendiger Verlagerungen des Wasserfahrzeugs in dem begrenzten Bereich möglichst klein wird. Somit wird vorteilhaft erreicht, dass das Wasserfahrzeug nicht in Ausschlussbereiche oder Verbotszonen eindringt, wobei zugleich aber eine permanente Positionierung des Wasserfahrzeugs an einer fest vorgegebenen Position vermieden wird. Vielmehr wird vorteilhaft die Anzahl der Neupositionierungen reduziert, sodass die mit der Vermeidung von Ausschlussbereichen verbundene Leistung sowie der Energieverbrauch des Wasserfahrzeugs deutliche gesenkt wird.

Insbesondere wird in Schritt a) die momentane Position des Wasserfahrzeugs innerhalb des begrenzten Bereichs erfasst.

Dass die momentane Position des Wasserfahrzeugs in Schritt a) wiederholend erfasst wird, bedeutet insbesondere, dass die Position des Wasserfahrzeugs im Laufe der Zeit und während der Durchführung des Verfahrens mehrfach, vorzugsweise regelmäßig, vorzugsweise fortwährend oder kontinuierlich, oder in diskreten Zeitschritten, erfasst wird. Es erfolgt also insbesondere eine dauerhafte Überwachung der momentanen Position des Wasserfahrzeugs.

In Schritt b) nähert sich das Wasserfahrzeug dem Ausschlussbereich insbesondere antriebslos, insbesondere durch Driften in dem begrenzten Bereich.

In Schritt c) wird das Wasserfahrzeug insbesondere durch seinen eigenen Antrieb an die neue Position verlagert, insbesondere an die neue Position gefahren.

Das Wasserfahrzeug hält sich in dem begrenzten Bereich insbesondere unverankert auf, also ohne dass ein Anker geworfen ist. Insbesondere befindet sich der begrenzte Bereich in einer Ankerverbotszone.

Dass die neue Position derart ermittelt wird, dass eine Anzahl notwendiger Verlagerungen des Wasserfahrzeugs in dem begrenzten Bereich möglichst klein wird, bedeutet insbesondere, dass die neue Position derart ermittelt wird, dass eine Zeit bis zu einer nächsten Annäherung an einen Ausschlussbereich möglichst groß - vorzugsweise maximal - wird, oder dass alternativ keine Verlagerung mehr bis zum bestimmungsgemäßen Verlassen des begrenzten Bereichs durch das Wasserfahrzeug nötig wird. Ist die Zeit bis zur nächsten Annäherung an einen Ausschlussbereich möglichst groß, bedarf es zugleich möglichst selten einer Neupositionierung und damit einer Aktivierung des Antriebs des Wasserfahrzeugs, wobei sich dadurch eine deutliche Reduzierung der mit der Positionierung verbundenen Kosten und Emissionen ergibt. Es kann vorteilhaft berücksichtigt werden, wann das Wasserfahrzeug bestimmungsgemäß den begrenzten Bereich verlässt, beispielsweise weil es eine vorgesehene Fahrtroute beginnt oder fortsetzt, aus einer Ankerverbotszone, insbesondere einer Bucht, ausfährt, oder dergleichen. Die neue Position kann dann vorteilhaft so ausgewählt werden, dass die Verlagerung dorthin weniger weit ausfällt, wodurch Kosten und Emissionen eingespart werden, wobei das Wasserfahrzeug bis zur nächsten Annäherung an den Ausschlussbereich ohnehin den begrenzten Bereich bestimmungsgemäß verlässt.

Auf besonders einfache Weise kann die Zeit bis zu einer nächsten Annäherung an einen Ausschlussbereich möglichst groß gemacht werden, indem ein Verlagerungsweg von der neuen Position bis zu dem Ausschlussbereich möglichst groß gemacht, insbesondere maximiert wird.

Eine vorteilhafte Verbesserung dieser einfachen Ausgestaltung sieht vor, dass Strömungs- und/oder Driftgeschwindigkeiten berücksichtigt werden, insbesondere entlang verschiedener Pfade oder Wege, wobei insbesondere verschiedene Pfade oder Wege für das Wasserfahrzeug mit dort herrschenden Strömungs- und/oder Driftgeschwindigkeiten gewichtet werden.

Bevorzugt wird die neue Position derart ermittelt, dass die Anzahl notwendiger Verlagerungen des Wasserfahrzeugs in dem begrenzten Bereich minimal wird. Dies bedeutet insbesondere, dass die Zeit bis zur nächsten Annäherung an einen Ausschlussbereich maximal wird.

Eine notwendige Verlagerung ist dabei insbesondere eine Verlagerung des Wasserfahrzeugs, die nötig ist oder nötig wird, um zu vermeiden, dass das Wasserfahrzeug eine Grenzverletzung durchführt, insbesondere um zu vermeiden, dass das Wasserfahrzeug in einen Ausschlussbereich eindringt.

Die Schritte a) bis c) werden bevorzugt wiederholend, insbesondere fortwährend oder iterativ durchgeführt, um das Wasserfahrzeug dauerhaft oder für eine vorbestimmte Zeit in dem begrenzten Bereich zu halten. Das hier vorgeschlagene Verfahren ersetzt somit insbesondere eine Verankerung des Wasserfahrzeugs.

Gemäß einer Weiterbildung der Erfindung ist vorgesehen, dass als der wenigstens eine Positionierungsparameter wenigstens ein Verlagerungsparameter des Wasserfahrzeugs ermittelt wird, indem ausgehend von der ersten Position des Wasserfahrzeugs eine Zeit und/oder eine Veränderung einer Winkellage des Wasserfahrzeugs bis zur Annäherung an eine Grenze des begrenzten Bereichs oder bis zum Erreichen der Grenze erfasst werden. Insbesondere über die Erfassung der Position und/oder Orientierung des Wasserfahrzeugs können so insbesondere sehr genaue Informationen über die Drift- und/oder Winkelgeschwindigkeit sowie die entsprechenden Beschleunigungen des Wasserfahrzeugs erhalten werden.

Gemäß einer Weiterbildung der Erfindung ist vorgesehen, dass der wenigstens eine Positionierungsparameter ausgewählt ist aus einer Gruppe, bestehend aus einem Verlagerungsparameter des Wasserfahrzeugs, einer Größe des Wasserfahrzeugs, einer flächenmäßigen Ausdehnung des begrenzten Bereichs, einem Zeitpunkt, zu dem das Wasserfahrzeug den begrenzten Bereich bestimmungsgemäß verlassen wird, einer Fremdposition von wenigstens einem Fremdwasserfahrzeug in dem begrenzten Bereich, und einer Bewegung, insbesondere einem Fremd-Verlagerungsparameter, des wenigstens einen Fremdwasserfahrzeugs.

Gemäß einer Weiterbildung der Erfindung ist vorgesehen, dass der wenigstens eine Verlagerungsparameter ausgewählt ist aus einer Gruppe, bestehend aus einer Driftgeschwindigkeit des Wasserfahrzeugs, einer Winkelgeschwindigkeit des Wasserfahrzeugs, einer Driftbeschleunigung des Wasserfahrzeugs, und einer Winkelbeschleunigung des Wasserfahrzeugs.

Bevorzugt wird der wenigstens eine Verlagerungsparameter des insbesondere antriebslosen Wasserfahrzeugs mehrfach bei Wiederholungen der Schritte a) bis c) erfasst, wobei eine Kartierung des wenigstens einen Verlagerungsparameters auf dem begrenzten Bereich vorgenommen und für die Ermittlung der neuen Position in Schritt b) verwendet wird. Dem liegt der Gedanke zugrunde, dass die neue Position bei jeder Wiederholung der Verfahrensschritte a) bis c) typischerweise nicht dieselbe sein wird wie bei den vorhergehenden Durchgängen. Das Wasserfahrzeug überstreicht somit während einer Mehrzahl von Bewegungen zwischen verschiedenen neuen Positionen und Annäherungen an Ausschlussbereiche nach und nach den begrenzten Bereich, wobei die Strömungsverhältnisse in dem begrenzten Bereich vermessen und in Form der Kartierung hinterlegt werden können. Diese Erkenntnisse können dann verwendet werden, um mit zunehmender Präzision die neue Position in dem Schritt b) so zu ermitteln, dass tatsächlich die Anzahl der notwendigen Verlagerungen des Wasserfahrzeugs möglichst klein, insbesondere minimal wird.

Insbesondere ist vorgesehen, dass das Wasserfahrzeug bis auf die Verlagerung zu der neuen Position in dem Schritt c) antriebslos in dem begrenzten Bereich gehalten wird. Insbesondere wird das Wasserfahrzeug mit abgeschaltetem Antrieb in dem begrenzten Bereich gehalten, oder mit im Leerlauf befindlichem Antrieb. Die Bewegung des Wasserfahrzeugs von der ersten Position oder der neuen Position hin zu der Annäherung an den Ausschlussbereich erfolgt somit insbesondere aufgrund von Strömungsverhältnissen und/oder Windverhältnissen in dem begrenzten Bereich.

Die Bewegung des wenigstens einen Fremdwasserfahrzeugs wird insbesondere als Fremd-Verlagerungsparameter berücksichtigt. Der Fremd-Verlagerungsparameter ist dabei bevorzugt eine Driftgeschwindigkeit des Fremdwasserfahrzeugs, eine Driftbeschleunigung des Fremdwasserfahrzeugs, eine Winkelgeschwindigkeit des Fremdwasserfahrzeugs, und/oder eine Winkelbeschleunigung des Fremdwasserfahrzeugs.

Bevorzugt wird die Driftgeschwindigkeit des Fremdwasserfahrzeugs mit der Driftgeschwindigkeit des Wasserfahrzeugs verglichen, und das Wasserfahrzeug wird relativ zu dem Fremdwasserfahrzeug in Abhängigkeit von einem Vergleichsergebnis dieses Vergleichs positioniert. Stellt sich beispielsweise heraus, dass das Fremdwasserfahrzeug schneller driftet als das Wasserfahrzeug, wird bevorzugt das Wasserfahrzeug - in Driftrichtung gesehen - hinter dem Fremdwasserfahrzeug positioniert, um eine Kollision oder mit der Kollisionsvermeidung verknüpfte Ausweichbewegungen zu vermeiden. Tendenziell vergrößert sich dann nämlich aufgrund der Driftgeschwindigkeitsunterschiede der Abstand zwischen dem Wasserfahrzeug und dem Fremdwasserfahrzeug beim Driften. Umgekehrt wird bevorzugt das Wasserfahrzeug - in Driftrichtung gesehen - vor dem Fremdwasserfahrzeug positioniert, wenn das Wasserfahrzeug eine höhere Driftgeschwindigkeit aufweist als das Fremdwasserfahrzeug. Verschiedene Driftgeschwindigkeiten können sich insbesondere aufgrund verschiedener Angriffsflächen der verschiedenen Wasserfahrzeuge für Wasserströmungen und/oder Wind ergeben.

Dokumente US8825266B2, KR101799216B1, und WO2019/231464A1 beschreiben bekannte Steuereinrichtungen und Verfahren zur Steuerung von Wasserfahrzeugen.

Die Erfindung wird im Folgenden anhand der Zeichnung näher erläutert. Dabei zeigen:
- Figur 1: eine schematische Darstellung eines Ausführungsbeispiels eines Wasserfahrzeugs mit einem Ausführungsbeispiel einer Steuereinrichtung sowie eines ersten Schritts einer Ausführungsform eines Verfahrens zum Steuern des Wasserfahrzeugs;
- Figur 2: eine schematische Darstellung eines zweiten Schritts des Verfahrens;
- Figur 3: eine schematische Darstellung eines dritten Schritts des Verfahrens, und
- Figur 4: eine schematische Darstellung einer zweiten Ausführungsform des Verfahrens.

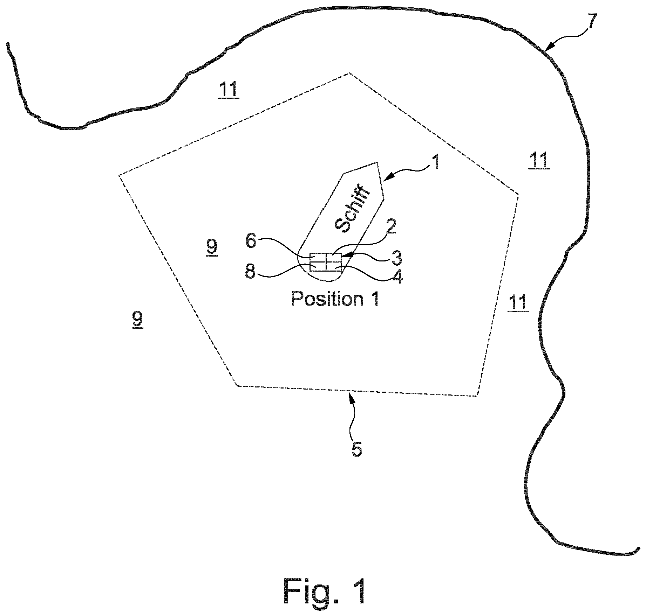

**Fig. 1** zeigt eine schematische Darstellung eines Ausführungsbeispiels eines Wasserfahrzeugs 1, das hier als Schiff ausgebildet ist. Das Wasserfahrzeug 1 weist ein Ausführungsbeispiel einer Steuereinrichtung 3 auf, die insbesondere eingerichtet ist zur Durchführung eines im Folgenden näher beschriebenen Verfahrens.

Die Steuereinrichtung 3 weist ein Positionserfassungsmodul 2 auf, das eingerichtet ist, um eine momentane Position des Wasserfahrzeugs 1 zu erfassen. Die Steuereinrichtung 3 weist außerdem ein Positionierungsmodul 4 auf, das eingerichtet ist, um dann, wenn sich das Wasserfahrzeug 1 insbesondere von einer ersten Position her kommend einer Grenze eines begrenzten Bereichs 5 bis auf einen vorbestimmten oder parametrierbaren Abstand annähert, eine neue Position, insbesondere als zweite Position für das Wasserfahrzeug 1 innerhalb des begrenzten Bereichs 5 in Abhängigkeit von wenigstens einem Positionierungsparameter zu ermitteln, wobei die zweite Position bevorzugt von der ersten Position verschieden ist.

Das Positionserfassungsmodul 2 ist bevorzugt eingerichtet, um die momentane Position des Wasserfahrzeugs 1 wiederholend zu erfassen.

Das Positionierungsmodul 4 ist bevorzugt eingerichtet, um Steuerungsbefehle zu generieren, aufgrund derer das Wasserfahrzeug 1 an die neue Position verlagert wird, wenn die Steuerungsbefehle in dem Wasserfahrzeug 1 ausgeführt werden.

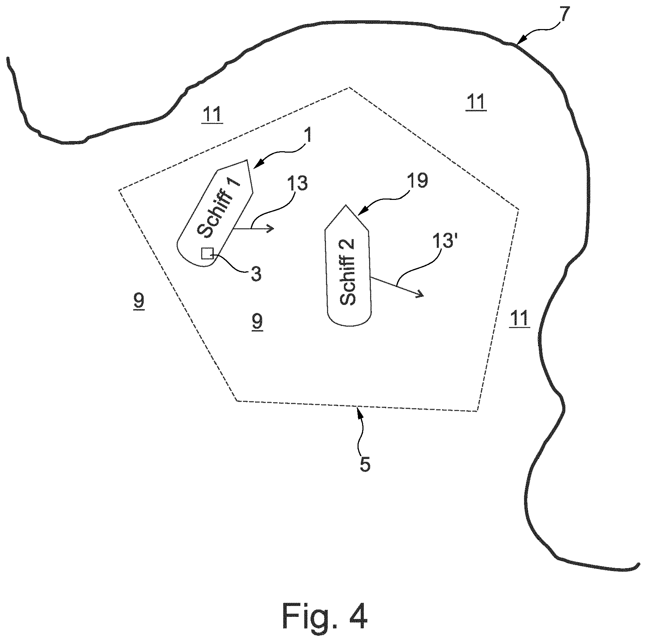

Der wenigstens eine Positionierungsparameter ist bevorzugt ausgewählt aus einer Gruppe, bestehend aus einer Driftgeschwindigkeit des Wasserfahrzeugs 1, einer Winkelgeschwindigkeit des Wasserfahrzeugs 1, einer Driftbeschleunigung des Wasserfahrzeugs 1, einer Winkelbeschleunigung des Wasserfahrzeugs 1, insgesamt auch als Verlagerungsparameter bezeichnet, einer Größe des Wasserfahrzeugs 1, einer flächenmäßigen Ausdehnung des begrenzten Bereichs 5, einem Zeitpunkt, zu dem das Wasserfahrzeug 1 den begrenzten Bereich 5 bestimmungsgemäß verlassen wird, einer Fremdposition von wenigstens einem in Figur 4 dargestellten Fremdwasserfahrzeug 19 in dem begrenzten Bereich 5, und einer Bewegung des wenigstens einen Fremdwasserfahrzeugs 19.

Die Steuereinrichtung 3 ist insbesondere eingerichtet, um den wenigstens einen Verlagerungsparameter wiederholend ortsabhängig zu erfassen.

Die Steuereinrichtung 3 weist bevorzugt ein Kartierungsmodul 6 auf, das eingerichtet ist, um den wenigstens einen Verlagerungsparameter einem Ort innerhalb des begrenzten Bereichs 5 zuzuordnen, an dem der wenigstens eine Verlagerungsparameter durch die Steuereinrichtung 3 erfasst ist.

Die Steuereinrichtung 3 weist außerdem bevorzugt ein Kommunikationsmodul 8 auf, das eingerichtet ist, um wenigstens eine Information von dem Fremdwasserfahrzeug 19 zu empfangen, wobei die wenigstens eine Information bevorzugt ausgewählt ist aus einer Gruppe, bestehend aus einer Fremdposition des Fremdwasserfahrzeugs 19 und einem Fremd-Verlagerungsparameter des Fremdwasserfahrzeugs 19.

Im Rahmen des Verfahrens zum Steuern des Wasserfahrzeugs 1 wird insbesondere der begrenzte Bereich 5 vorgegeben, in welchem sich das Wasserfahrzeug 1 aufhalten darf. Die momentane Position des Wasserfahrzeugs 1 wird dabei - vorzugsweise wiederholend - erfasst, wobei dann, wenn sich das Wasserfahrzeug 1 insbesondere von der ersten Position her kommend einer Grenze des begrenzten Bereichs 5 bis auf den vorbestimmten oder parametrierbaren Abstand annähert, die neue, insbesondere zweite Position für das Wasserfahrzeug 1 innerhalb des begrenzten Bereichs 5 in Abhängigkeit von dem wenigstens einen Positionierungsparameter ermittelt wird, wobei bevorzugt die zweite Position von der ersten Position verschieden gewählt wird.

Im Rahmen des Verfahrens wird das Wasserfahrzeug 1 insbesondere innerhalb des begrenzten Bereichs 5 derart positioniert, dass ein Antrieb des Wasserfahrzeugs 1 möglichst wenig angesteuert werden muss, um das Wasserfahrzeug 1 innerhalb des begrenzten Bereichs 5 zu halten. Somit kann das Wasserfahrzeug 1 vorteilhaft insbesondere kosteneffizient, mit geringen Lärmemissionen, Schadstoffemissionen, und insbesondere ohne Verankerung positioniert werden.

Der begrenzte Bereich 5 wird insbesondere in der Steuereinrichtung 3 virtuell für das Wasserfahrzeug 1 vorgegeben.

Zur Durchführung des Verfahrens werden in bevorzugter Ausgestaltung die im Folgenden näher erläuterten Schritte durchgeführt.

Figur 1 zeigt insbesondere einen ersten Schritt einer ersten Ausführungsform eines Verfahrens zum Steuern, insbesondere Positionieren, des Wasserfahrzeugs 1.

Eine momentane Position des Wasserfahrzeugs 1 innerhalb des begrenzten Bereichs wird a) wiederholend, insbesondere regelmäßig, erfasst. Dabei ist das Wasserfahrzeug 1 hier in einer als "Position 1" bezeichneten, ersten Position, insbesondere einer Startposition, innerhalb des begrenzten Bereichs 5 dargestellt.

In bevorzugter Ausgestaltung ist der begrenzte Bereich 5 innerhalb einer Bucht 7 eines Gewässers 9 angeordnet. Insbesondere ist es möglich, dass der begrenzte Bereich 5 innerhalb einer Ankerverbotszone angeordnet ist, in welcher das Wasserfahrzeug 1 nicht vor Anker gehen darf. Ausgehend von der ersten Position in Figur 1 liegt das Wasserfahrzeug 1 bevorzugt antriebslos, das heißt mit abgeschaltetem Antrieb oder mit im Leerlauf befindlichem Antrieb, in dem begrenzten Bereich 5.

Eine Grenze des begrenzten Bereichs 5 ist in Figur 1 sowie den folgenden Figuren hier insbesondere als gestrichelte Linie dargestellt. Außerhalb des begrenzten Bereichs - abgeteilt durch die gestrichelte Linie - befindet sich ein Ausschlussbereich 11, in dem sich das Wasserfahrzeug 1 nicht aufhalten darf, beziehungsweise in den das Wasserfahrzeug 1 nicht einfahren darf.

Der begrenzte Bereich 5 ist insbesondere kleiner als das Gewässer 9, aber größer, insbesondere viel größer, als das Wasserfahrzeug 1. Im Rahmen des im Folgenden näher erläuterten Verfahrens wird also das Wasserfahrzeug 1 nicht auf einer eng durch seine eigenen Abmessungen - gegebenenfalls mit Toleranzen - begrenzten Position gehalten, sondern es wird lediglich gefordert, dass das Wasserfahrzeug 1 innerhalb des begrenzten Bereichs 5 bleibt.

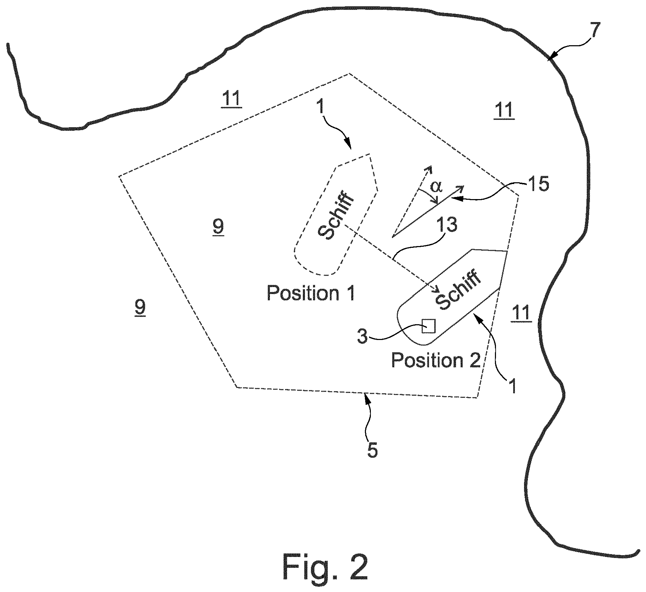

**Fig. 2** zeigt einen zweiten Schritt der ersten Ausführungsform des Verfahrens.

Gleiche und funktionsgleiche Elemente sind in allen Figuren mit gleichen Bezugszeichen versehen, so dass insofern jeweils auf die vorangegangene Beschreibung verwiesen wird.

Das Wasserfahrzeug 1 ist in vergangenen oder zukünftigen Positionen stets gestrichelt dargestellt, in aktuellen Positionen dagegen durchgezogen. Ferner ist das Steuergerät 3 nur in der jeweils aktuellen Position des Wasserfahrzeugs 1 dargestellt.

In Figur 2 ist verdeutlicht, dass das antriebslos in dem begrenzten Bereich 5 angeordnete Wasserfahrzeug 1 ausgehend von der ersten Position, Position 1, sich zu einer weiteren Position, hier als "Position 2" bezeichnet, bewegt. Dabei wird das Wasserfahrzeug 1 insbesondere durch Strömungen sowie Winde in dem begrenzten Bereich 5 bewegt. Dabei nähert sich das Wasserfahrzeug 1 dem Ausschlussbereich 11 an, berührt hier in Figur 2 insbesondere bereits die Grenze des begrenzten Bereichs 5.

Während dieser Bewegung des Wasserfahrzeugs 1 wird insbesondere wenigstens ein Verlagerungsparameter für das Wasserfahrzeug 1 ermittelt, in dem ausgehend von der ersten Position, Position 1, eine Zeit und/oder eine Veränderung einer Winkellage des Wasserfahrzeugs 1 bis zur Annäherung an den Ausschlussbereich 11, insbesondere bis zu der weiteren Position, Position 2, erfasst werden. Insbesondere werden hier eine durch einen gestrichelten Pfeil dargestellte Driftgeschwindigkeit 13 - als vektorielle Größe -, sowie eine Winkelgeschwindigkeit 15 als Verlagerungsparameter erfasst, vorzugsweise auch eine Driftbeschleunigung und/oder eine Winkelbeschleunigung.

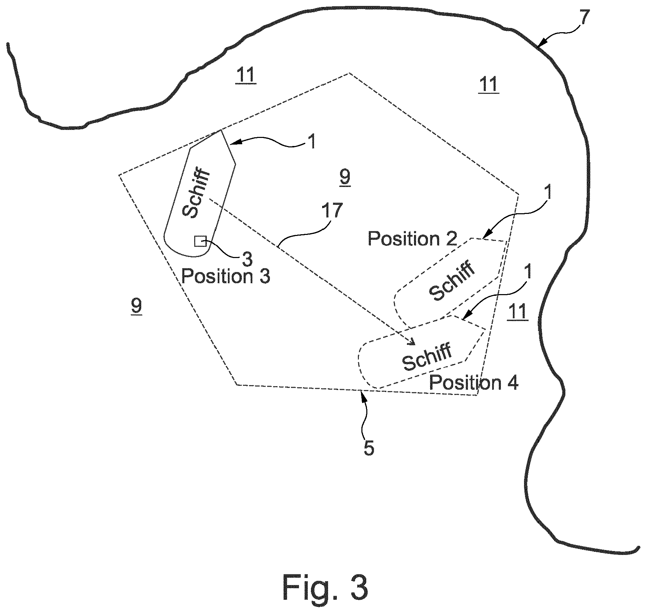

Fig. 3 zeigt einen dritten Schritt der ersten Ausführungsform des Verfahrens.

Wenn sich das Wasserfahrzeug 1 dem Ausschlussbereich 11 - antriebslos - nähert, wird b) eine neue Position als zweite Position, bei dem hier dargestellten dritten Schritt als "Position 3" bezeichnet, für das Wasserfahrzeug 1 ermittelt, wobei die neue Position derart ermittelt wird, dass eine Anzahl notwendiger Verlagerungen des Wasserfahrzeugs 1 in dem begrenzten Bereich 5 möglichst klein wird. Das Wasserfahrzeug 1 wird dann c) an die neue Position verlagert, insbesondere durch seinen eigenen Antrieb dorthin gefahren. Das Ergebnis dieser aktiven Verlagerung des Wasserfahrzeugs 1 ist in Figur 3 dargestellt, das Wasserfahrzeug 1 ist dann in der neuen Position, Position 3, angeordnet. Diese Position 3 ist insbesondere so ermittelt, dass ein insbesondere auf der Grundlage der erfassten Verlagerungsparameter, insbesondere der Driftgeschwindigkeit 13 und der Winkelgeschwindigkeit 15, vorhergesagter Verlagerungsvektor 17 bis zu einer vorhergesagten zukünftigen Position, "Position 4", des Wasserfahrzeugs 1, an der sich dieses erneut dem Ausschlussbereich 11 annähert, möglichst groß wird. Insbesondere auf diese Art wird die Zeit, die bis zu der nächsten Annäherung an den Ausschlussbereich 11 vergeht, möglichst groß. Es wird also insbesondere berechnet, an welche Position das Wasserfahrzeug 1 manövriert werden muss, sodass der prognostizierte Verlagerungsvektor 17 innerhalb des begrenzten Bereichs 5 möglichst lang wird, bevor das Wasserfahrzeug 1 erneut eine Grenzverletzung durchführt. Liegt nun das Wasserfahrzeug 1 an der neuen Position, Position 3, kann es bis zu der zukünftigen Position, Position 4, antriebslos bleiben.

Diese Vorgehensweise wird bevorzugt wiederholend oder iterativ durchgeführt, sodass im Ergebnis das Wasserfahrzeug 1 in den begrenzten Bereich 5 gehalten wird, wobei jedoch ein Eingriff in den Antrieb möglichst selten erfolgt. Dies spart Kosten, Emissionen, und vermeidet Lärm.

Ferner kann sich das Wasserfahrzeug 1 in der Bucht 7 aufhalten, ohne vor Anker gehen zu müssen; ein insoweit gegebenenfalls bestehendes Ankerverbot kann also eingehalten werden, ohne dass daraus eine Gefahr resultiert, oder das Wasserfahrzeug 1 mit hohem Leistungs- und Kostenaufwand sowie hohen Emissionen und Lärmbelastungen an einer im Wesentlichen durch seine Abmessungen definierten Position gehalten werden muss.

Wie bereits ausgeführt, wird bei der Ermittlung der neuen Position der wenigstens eine Verlagerungsparameter bevorzugt berücksichtigt, insbesondere die Driftgeschwindigkeit 13 und/oder die Winkelgeschwindigkeit 15.

Vorzugsweise wird der wenigstens eine Verlagerungsparameter mehrfach bei Wiederholungen der Schritte a) bis c) erfasst, wobei eine Kartierung des wenigstens einen Verlagerungsparameters auf dem begrenzten Bereich 5 vorgenommen und für die Ermittlung der jeweiligen neuen Position in Schritt b) verwendet wird.

Bis auf die aktive Verlagerung des Wasserfahrzeugs 1 in Schritt c) zu der jeweils neuen Position wird das Wasserfahrzeug 1 in dem begrenzten Bereich 5 vorzugsweise antriebslos betrieben, das heißt insbesondere mit abgeschaltetem Antrieb, oder mit im Leerlauf befindlichem Antrieb.

**Fig. 4** zeigt eine schematische Darstellung einer zweiten Ausführungsform des Verfahrens.

Dabei ist hier zusätzlich zu dem Wasserfahrzeug 1 außerdem ein Fremdwasserfahrzeug 19 in dem begrenzten Bereich 5 angeordnet. Dabei wird im Rahmen der zweiten Ausführungsform des Verfahrens - insbesondere zusätzlich zu den in Zusammenhang mit der ersten Ausführungsform des Verfahrens beschriebenen Schritten und Vorgehensweisen - eine Fremdposition und/oder eine Bewegung - insbesondere ein Fremd-Verlagerungsparameter - des Fremdwasserfahrzeugs 19 in dem begrenzten Bereich 5 bei der Ermittlung der zweiten, neuen Position für das Wasserfahrzeug 1 berücksichtigt. Diese Fremdposition und/oder Bewegung wird bevorzugt durch Abstandsmessung, insbesondere mittels Radar, Lidar, oder einem anderen geeigneten System ermittelt, oder von dem Fremdwasserfahrzeug 19 als Information erhalten. Die Berücksichtigung der Fremdposition und/oder Bewegung des Fremdwasserfahrzeugs 19 bei der Neupositionierung des Wasserfahrzeugs 1 ermöglicht es in vorteilhafter Weise, eine Kollision zwischen dem Wasserfahrzeug 1 und dem Fremdwasserfahrzeug 19 - besonders bevorzugt ohne zusätzliche Eingriffe in den Antrieb des Wasserfahrzeugs 1 - zu vermeiden.

Bevorzugt tauschen das Wasserfahrzeug 1 und das wenigstens eine Fremdwasserfahrzeug 19 wenigstens eine Information aus, insbesondere ausgewählt aus einer Gruppe bestehend aus einer momentanen Position und wenigstens einem Verlagerungsparameter, besonders bevorzugt einer vektoriellen Driftgeschwindigkeit. Insoweit sind hier die Driftgeschwindigkeit 13 für das Wasserfahrzeug 1 sowie eine Fremd-Driftgeschwindigkeit 13' für das Fremdwasserfahrzeug 19 in Figur 4 dargestellt.

Besonders bevorzugt wird das Wasserfahrzeug 1 in Abhängigkeit von einem Vergleich der Driftgeschwindigkeit 13 mit der Fremd-Driftgeschwindigkeit 13' positioniert, insbesondere entweder - in Driftrichtung - vor dem Fremdwasserfahrzeug 19 oder - wie in Figur 4 dargestellt - hinter dem Fremdwasserfahrzeug 19.

Bevorzugt werden die von dem Fremdwasserfahrzeug 19 erhaltenen Fremd-Verlagerungsparameter in die Kartierung des wenigstens einen Verlagerungsparameters mit aufgenommen.

## Patentansprüche

1. Steuereinrichtung (3) zur Steuerung eines Wasserfahrzeugs (1), mit
- einem Positionserfassungsmodul (2), das eingerichtet ist, um eine momentane Position des Wasserfahrzeugs (1) zu erfassen, und mit
- einem Positionierungsmodul (4),
**dadurch gekennzeichnet, dass**
- das Positionierungsmodul (4) eingerichtet ist, um dann, wenn sich das Wasserfahrzeug (1) einer Grenze eines begrenzten Bereichs (5) bis auf einen vorbestimmten oder parametrierbaren Abstand annähert, eine neue Position für das Wasserfahrzeug (1) innerhalb des begrenzten Bereichs (5) in Abhängigkeit von wenigstens einem Positionierungsparameter zu ermitteln, wobei
- das Positionierungsmodul (4) zusätzlich eingerichtet ist, um Steuerungsbefehle zu generieren, aufgrund derer das Wasserfahrzeug (1) an die neue Position verlagert wird, wenn die Steuerungsbefehle in dem Wasserfahrzeug (1) ausgeführt werden.

2. Steuereinrichtung (3) nach Anspruch 1, **dadurch gekennzeichnet, dass** das Positionserfassungsmodul (2) eingerichtet ist, um die momentane Position des Wasserfahrzeugs (1) wiederholend zu erfassen.

3. Steuereinrichtung (3) nach einem der vorhergehenden Ansprüche, **dadurch gekennzeichnet, dass** der wenigstens eine Positionierungsparameter ausgewählt ist aus einer Gruppe, bestehend aus: einer Driftgeschwindigkeit des Wasserfahrzeugs (1), einer Winkelgeschwindigkeit des Wasserfahrzeugs (1), einer Driftbeschleunigung des Wasserfahrzeugs (1), einer Winkelbeschleunigung des Wasserfahrzeugs (1), einer Größe des Wasserfahrzeugs (1), einer flächenmäßigen Ausdehnung des begrenzten Bereichs (5), einem Zeitpunkt, zu dem das Wasserfahrzeug (1) den begrenzten Bereich (5) bestimmungsgemäß verlassen wird, einer Fremdposition von wenigstens einem Fremdwasserfahrzeug (19) in dem begrenzten Bereich (5), und einer Bewegung des wenigstens einen Fremdwasserfahrzeugs (19).

4. Steuereinrichtung (3) nach Anspruch 3, **dadurch gekennzeichnet, dass** die Steuereinrichtung (3) eingerichtet ist, um wenigstens einen Verlagerungsparameter, ausgewählt aus einer Gruppe, bestehend aus: Der Driftgeschwindigkeit des Wasserfahrzeugs (1), der Winkelgeschwindigkeit des Wasserfahrzeugs (1), der Driftbeschleunigung des Wasserfahrzeugs (1), und der Winkelbeschleunigung des Wasserfahrzeugs (1), wiederholend ortsabhängig zu erfassen.

5. Steuereinrichtung (3) nach Anspruch 4, **gekennzeichnet durch** ein Kartierungsmodul (6), das eingerichtet ist, um den wenigstens einen Verlagerungsparameter einem Ort innerhalb des begrenzten Bereichs (5) zuzuordnen, an dem der wenigstens eine Verlagerungsparameter durch die Steuereinrichtung (3) erfasst ist.

6. Steuereinrichtung (3) nach einem der vorhergehenden Ansprüche, **gekennzeichnet durch** ein Kommunikationsmodul (8), das eingerichtet ist, um wenigstens eine Information von einem Fremdwasserfahrzeug (19) zu empfangen, wobei die wenigstens eine Information bevorzugt ausgewählt ist aus einer Gruppe, bestehend aus: Einer Fremdposition des Fremdwasserfahrzeugs (19) und einem Fremd-Verlagerungsparameter des Fremdwasserfahrzeugs (19).

7. Wasserfahrzeug (1), mit einer Steuereinrichtung (3) nach einem der Ansprüche 1 bis 6.

8. Verfahren zum Steuern eines Wasserfahrzeugs (1), wobei ein begrenzter Bereich (5) vorgegeben ist oder vorgegeben wird, in dem sich das Wasserfahrzeug (1) aufhalten darf, wobei eine momentane Position des Wasserfahrzeugs (1) - vorzugsweise wiederholend - erfasst wird, wobei dann, wenn sich das Wasserfahrzeug (1) einer Grenze des begrenzten Bereichs (5) bis auf einen vorbestimmten oder parametrierbaren Abstand annähert, eine neue Position für das Wasserfahrzeug (1) innerhalb des begrenzten Bereichs (5) in Abhängigkeit von wenigstens einem Positionierungsparameter ermittelt wird, und wobei das Wasserfahrzeug an die neue Position verlagert wird.

9. Verfahren nach Anspruch 8, **dadurch gekennzeichnet, dass** als der wenigstens eine Positionierungsparameter wenigstens ein Verlagerungsparameter des Wasserfahrzeugs (1) ermittelt wird, indem ausgehend von einer ersten Position des Wasserfahrzeugs (1) eine Zeit und/oder eine Veränderung einer Winkellage des Wasserfahrzeugs (1) bis zur Annäherung an eine Grenze des begrenzten Bereichs (5) oder bis zum Erreichen der Grenze erfasst wird/werden.

10. Verfahren nach einem der Ansprüche 8 und 9, **dadurch gekennzeichnet, dass** der wenigstens eine Positionierungsparameter ausgewählt ist aus einer Gruppe, bestehend aus: Einem Verlagerungsparameter des Wasserfahrzeugs (1), einer Größe des Wasserfahrzeugs (1), einer flächenmäßigen Ausdehnung des begrenzten Bereichs (5), einem Zeitpunkt, zu dem das Wasserfahrzeug (1) den begrenzten Bereich (5) bestimmungsgemäß verlassen wird, einer Fremdposition von wenigstens einem Fremdwasserfahrzeug (19) in dem begrenzten Bereich (5), und einer Bewegung des wenigstens einen Fremdwasserfahrzeugs (19).

11. Verfahren nach Anspruch 10, **dadurch gekennzeichnet, dass** der wenigstens eine Verlagerungsparameter ausgewählt ist aus einer Gruppe, bestehend aus: Einer Driftgeschwindigkeit des Wasserfahrzeugs (1), einer Winkelgeschwindigkeit des Wasserfahrzeugs (1), einer Driftbeschleunigung des Wasserfahrzeugs (1), und einer Winkelbeschleunigung des Wasserfahrzeugs (1).

## Claims

1. Control device (3) for controlling a watercraft (1), comprising
- a position detection module (2) configured to detect a current position of the watercraft (1) and
- a positioning module (4),
**characterised in that**
- the positioning module (4) is configured to determine a new position for the watercraft (1) within a delimited region (5) depending on at least one positioning parameter when the watercraft (1) approaches a boundary of the delimited region (5) to within a predetermined or parameterizable distance, wherein
- the positioning module (4) is further configured to generate control commands, based on which the watercraft (1) is moved to the new position, when the control commands are carried out in the watercraft (1).

2. Control device (3) according to claim 1, **characterised in that** the position detection module (2) is configured to repeatedly detect the current position of watercraft (1).

3. Control device (3) according to any of the preceding claims, **characterised in that** the at least one positioning parameter is selected from a group consisting of: a drift velocity of the watercraft (1), an angular velocity of the watercraft (1), a drift acceleration of the watercraft (1), an angular acceleration of the watercraft (1), a size of the watercraft (1), an area extent of the delimited region (5), a time at which the watercraft (1) is intended to leave the delimited region (5), a third-party position of at least one third-party watercraft (19) in the delimited region (5), and a movement of the at least one third-party watercraft (19).

4. Control device (3) according to claim 3, **characterised in that** the control device (3) is configured to detect at least one repositioning parameter selected from a group consisting of: the drift velocity of the watercraft (1), the angular velocity of the watercraft (1), the drift acceleration of the watercraft (1), and the angular acceleration of the watercraft (1), repeatedly and in a location-dependent manner.

5. Control device (3) according to claim 4, **characterised by** a mapping module (6) configured to assign the at least one repositioning parameter to a location within the delimited region (5) at which the at least one repositioning parameter is detected by the control device (3).

6. Control device (3) according to any of the preceding claims, **characterised by** a communication module (8) configured to receive at least one information from a third-party watercraft (19), wherein the at least one information is preferably selected from a group consisting of: a third-party position of the third-party watercraft (19) and a third-party repositioning parameter of the third-party watercraft (19).

7. Watercraft (1) comprising a control device (3) according to any of claims 1 to 6.

8. Method for controlling a watercraft (1), wherein a delimited region (5) is specified or is to be specified within which the watercraft (1) is permitted to remain, wherein a current position of the watercraft (1) is detected - preferably repeatedly - and wherein, when the watercraft (1) approaches a boundary of the delimited region (5) to within a predetermined or parameterizable distance, a new position for the watercraft (1) within the delimited region (5) is determined depending on at least one positioning parameter, and wherein the watercraft (1) is moved to the new position.

9. Method according to claim 8, **characterised in that**, as the at least one positioning parameter at least one repositioning parameter of the watercraft (1) is determined by detecting, starting from a first position of the watercraft (1) a time and/or a change in an angular position of the watercraft (1) until approaching a boundary of the delimited region (5) or until reaching the boundary.

10. Method according to any of claims 8 and 9, **characterised in that** the at least one positioning parameter is selected from a group consisting of: a repositioning parameter of the watercraft (1), a size of the watercraft (1), an area extent of the delimited region (5), a time at which the watercraft (1) is intended to leave the delimited region (5), a third-party position of at least one third-party watercraft (19) in the delimited region (5), and a movement of the at least one third-party watercraft (19).

11. Method according to claim 10, **characterised in that** the at least one repositioning parameter is selected from a group consisting of: a drift velocity of the watercraft (1), an angular velocity of the watercraft (1), a drift acceleration of the watercraft (1), and an angular acceleration of the watercraft (1).

## Revendications

1. Dispositif de commande (3) pour la commande d'un véhicule nautique (1), avec
- un module de détection de position (2) qui est conçu pour détecter une position actuelle du véhicule nautique (1), et avec
- un module de positionnement (4),
**caractérisé en ce que**
- le module de positionnement (4) est conçu pour alors déterminer, lorsque le véhicule nautique (1) s'approche d'une limite d'une zone délimitée (5) jusqu'à une distance prédéfinie ou paramétrable, une nouvelle position pour le véhicule nautique (1) à l'intérieur de la zone délimitée (5) en fonction d'au moins un paramètre de positionnement, dans lequel
- le module de positionnement (4) est en outre conçu pour générer des instructions de commande sur la base desquelles le véhicule nautique (1) est déplacé en la nouvelle position lorsque les instructions de commande sont exécutées dans le véhicule nautique (1).

2. Dispositif de commande (3) selon la revendication 1, **caractérisé en ce que** le module de détection de position (2) est conçu pour détecter de manière répétée la position actuelle du véhicule nautique (1).

3. Dispositif de commande (3) selon l'une des revendications précédentes, **caractérisé en ce que** l'au moins un paramètre de positionnement est sélectionné dans un groupe constitué : d'une vitesse de dérive du véhicule nautique (1), d'une vitesse angulaire du véhicule nautique (1), d'une accélération de dérive du véhicule nautique (1), d'une accélération angulaire du véhicule nautique (1), d'une taille du véhicule nautique (1), d'une étendue en superficie de la zone délimitée (5), d'un moment auquel le véhicule nautique (1) quitte la zone délimitée (5) comme prévu, d'une position tierce d'au moins un véhicule nautique tiers (19) dans la zone délimitée (5), et d'un mouvement de l'au moins un véhicule nautique tiers (19).

4. Dispositif de commande (3) selon la revendication 3, **caractérisé en ce que** le dispositif de commande (3) est conçu pour détecter de manière répétée en fonction du lieu au moins un paramètre de déplacement, sélectionné dans un groupe constitué : de la vitesse de dérive du véhicule nautique (1), de la vitesse angulaire du véhicule nautique (1), de l'accélération de dérive du véhicule nautique (1), et de l'accélération angulaire du véhicule nautique (1).

5. Dispositif de commande (3) selon la revendication 4, **caractérisé par** un module de cartographie (6) qui est conçu pour associer l'au moins un paramètre de déplacement à un lieu à l'intérieur de la zone délimitée (5) en lequel l'au moins un paramètre de déplacement est détecté par le biais du dispositif de commande (3).

6. Dispositif de commande (3) selon l'une des revendications précédentes, **caractérisé par** un module de communication (8) qui est conçu pour recevoir au moins une information en provenance d'un véhicule nautique tiers (19), dans lequel l'au moins une information est de préférence sélectionnée dans un groupe constitué : d'une position tierce du véhicule nautique tiers (19) et d'un paramètre de déplacement tiers du véhicule nautique tiers (19).

7. Véhicule nautique (1), avec un dispositif de commande (3) selon l'une des revendications 1 à 6.

8. Procédé pour la commande d'un véhicule nautique (1), dans lequel est prédéfinie ou prédéfinissable une zone délimitée (5) dans laquelle le véhicule nautique (1) peut séjourner, dans lequel une position actuelle du véhicule nautique (1) est détectée - de préférence de manière répétée, dans lequel alors, lorsque le véhicule nautique (1) s'approche d'une limite de la zone délimitée (5) jusqu'à une distance prédéfinie ou paramétrable, une nouvelle position pour le véhicule nautique (1) est déterminée à l'intérieur de la zone délimitée (5) en fonction d'au moins un paramètre de positionnement, et dans lequel le véhicule nautique est déplacé en la nouvelle position.

9. Procédé selon la revendication 8, **caractérisé en ce qu'**en tant que l'au moins un paramètre de positionnement, au moins un paramètre de déplacement du véhicule nautique (1) est déterminé par le fait qu'à partir d'une première position du véhicule nautique (1), une période et/ou une modification d'une position angulaire du véhicule nautique (1) est ou sont détectée(s) jusqu'au rapprochement d'une limite de la zone délimitée (5) ou jusqu'à l'atteinte de la limite.

10. Procédé selon l'une des revendications 8 et 9, **caractérisé en ce que** l'au moins un paramètre de positionnement est sélectionné dans un groupe constitué : d'un paramètre de déplacement du véhicule nautique (1), d'une taille du véhicule nautique (1), d'une étendue en superficie de la zone délimitée (5), d'un moment auquel le véhicule nautique (1) quitte la zone délimitée (5) comme prévu, d'une position tierce d'au moins un véhicule nautique tiers (19) dans la zone délimitée (5), et d'un mouvement de l'au moins un véhicule nautique tiers (19).

11. Procédé selon la revendication 10, **caractérisé en ce que** l'au moins un paramètre de déplacement est sélectionné dans un groupe constitué : d'une vitesse de dérive du véhicule nautique (1), d'une vitesse angulaire du véhicule nautique (1), d'une accélération de dérive du véhicule nautique (1), et d'une accélération angulaire du véhicule nautique (1).
